## Europäisches Patentamt
## European Patent Office
## Office européen des brevets

(11) Veröffentlichungsnummer: **0 355 622 B1**

(12)

# EUROPÄISCHE PATENTSCHRIFT

(45) Veröffentlichungstag der Patentschrift: **16.06.93**

(21) Anmeldenummer: **89114891.8**

(22) Anmeldetag: **11.08.89**

(51) Int. Cl.⁵: **B29C 59/12**, H01T 19/00, B05D 3/14

(54) Verfahren und Vorrichtung zur Oberflächenvorbehandlung von ein- oder mehrschichtigem Formmaterial mittels einer elektrischen Koronaentladung.

(30) Priorität: **16.08.88 DE 3827629**

(43) Veröffentlichungstag der Anmeldung:
**28.02.90 Patentblatt 90/09**

(45) Bekanntmachung des Hinweises auf die Patenterteilung:
**16.06.93 Patentblatt 93/24**

(84) Benannte Vertragsstaaten:
**BE DE FR GB IT LU NL SE**

(56) Entgegenhaltungen:
EP-A- 0 010 632      EP-A- 0 133 832
EP-A- 0 136 870      EP-A- 0 160 889
EP-A- 0 279 371      DE-A- 3 208 590
FR-A- 2 578 176

(73) Patentinhaber: **HOECHST AKTIENGESELL-SCHAFT**
**Postfach 80 03 20**
**W-6230 Frankfurt am Main 80(DE)**

(72) Erfinder: **Dinter, Peter, Dipl.-Ing.**
**Am Wiesenberg 4**
**W-6227 Hallgarten(DE)**
Erfinder: **Dallmann, Hermann, Dr.**
**Erbsenacker 29**
**W-6200 Wiesbaden(DE)**
Erfinder: **Bothe, Lothar, Dr.**
**Am Heiligenhaus 9**
**W-6500 Mainz(DE)**
Erfinder: **Gribbin, John Derek, Dr.**
**Birkenweg 16**
**W-6229 Schlangenbad 2(DE)**

EP 0 355 622 B1

## Beschreibung

Die Erfindung betrifft ein Verfahren zur Oberflächenvorbehandlung von ein- oder mehrschichtigem Formmaterial mittels einer elektrischen Koronaentladung, die zwischen spannungsführenden Elektroden und einer geerdeten Gegenelektrode abläuft, zwischen denen das ein- oder mehrschichtige Formmaterial sich befindet, von dem eine elektrisch leitfähige Schicht metallische Partikel in einer Kunststoffmatrix enthält, sowie eine Vorrichtung zur Oberflächenvorbehandlung des Formmaterials.

In vielen Fällen bereitet die normalerweise glatte Oberfläche von Formmaterialien aus Kunststoffen, insbesondere von Folien, insofern Schwierigkeiten, als die Folienbahnen mit extrem gutem Schlupf leicht dazu neigen, beim Aufrollen auf einen Wickel zu teleskopieren. Weitere Schwierigkeiten aufgrund der glatten Oberflächen von Folien bzw. Formmaterialien ergeben sich bei der Veredelung dieser Materialien, zur Steigerung der Adhäsion von Druckfarben, Lacken, Klebern, aufgedampften Metallen und dergleichen.

In der EP-A 0 136 870 ist ein Verfahren beschrieben, bei dem eine mit Metall in ihrer Kunststoffmatrix versetzte organische Schicht auf einem Substrat aufgebracht ist und diese Schicht einer Koronaentladung ausgesetzt wird. Dieses Verfahren dient vor allem dazu, einen erhöhten Korrosionsschutz für das Substrat zu erzielen.

Es gehört auch zum Stand der Technik, chemischphysikalische Oberflächenmodifizierungen von Kunststoffen vorzunehmen, insbesondere von Folien. Ein grundsätzliches Verfahren, das nur Veränderungen auf der Kunststoffoberfläche herbeiführt, besteht in einer Vorbehandlung der Kunststoffoberfläche durch eine elektrische Koronaentladung. So erfolgt nach der DE-OS 32 47 795 eine Koronavorbehandlung einer Kunststoff-Folienbahn in der Weise, daß die Folienbahn auf der Oberseite und/oder der Unterseite einer Koronabeaufschlagung unterzogen wird, die unterschiedliche Vorbehandlungsintensitäten ergibt. Hierzu wird die zu behandelnde Folienbahn über eine elektrisch geerdete Walze geführt und die elektrischen Ladungen durch Beaufschlagen der der Walzenoberfläche abgewandten Seite der Folienbahn mit einer elektrischen Koronaentladung vorgenommen, die durch das Anlegen eines hochfrequenten Wechselstroms hoher Spannung an eine im Abstand zur Walze angordnete Elektrode erzeugt wird. Die Vorbehandlung erfolgt im allgemeinen unter Luft bei Atmosphärendruck.

Die ständig steigenden Forderungen des Marktes nach Produkten mit verbesserten Oberflächeneigenschaften führten auch zur Entwicklung von Verfahren unter Einsatz von chemisch reaktionsfähigen Substanzen, die beispielsweise bestimmte chemische Bindungen in der Oberfläche aufbrechen und dadurch die Oberflächeneigenschaften von Kunststoffen verändern. In der US-PS 3,142,630 ist ein Verfahren zur Vergrößerung der Adhäsion beschrieben, bei dem eine Folienbahn durch eine nicht-ionisierende Flüssigkeit geführt wird und in der Flüssigkeit einer Koronaentladung ausgesetzt wird. Diese Flüssigkeit kann beispielsweise ein Transformatorkühlöl, pflanzliches Öl oder ein sonstiges reines Öl, frei von Verunreinigungen, sein, das weitgehend elektrisch nicht leitend ist.

In der GB-PS 938 325 ist ein Verfahren zur Vorbehandlung von thermoplastischen Folien beschrieben, bei dem eine elektrische Koronaentladung auf der Oberfläche in einer Stickstoffatmosphäre erfolgt. Der Stickstoff wird über Verteilungsleitungen durch hohle Elektrodenleitungen in die Koronaentladungszone eingeleitet.

Bei der Anordnung, die in der US-PS 3,274,089 beschrieben ist, werden durch Verteilungsleitungen organische Verbindungen aus der Gruppe polymerisierbare organische Verbindungen, nicht-polymerisierbare organische Verbindungen mit ersetzbaren Wasserstoffatomen, perhalogenierte Wasserstoff in die Koronaentladungszone eingeleitet, um die Oberfläche von Folienbahnen oder Gegenständen aus Polymeren zu modifizieren.

Diesen bekannten Verfahren ist gemeinsam, reaktionsfähige Gase in den Koronaentladungsbereich zwischen den Elektroden einzuleiten, bzw. die Koronaentladung in einer nicht-leitenden Flüssigkeit ablaufen zu lassen.

Aus der japanischen Patentschrift 17 747/73 ist eine Vorrichtung bekannt, in der eine Folienoberfläche einer Koronaentladung ausgesetzt wird. Die mit dem Generator verbundene Elektrode besteht aus porösen Sintermetallen und aus mehreren Metallnetzen. Die Entladungselektrode ist so geformt, daß sich in ihr zugeführte Flüssigkeit sammelt und gespeichert wird. Durch die angelegte Spannung an die Entladungselektrode wird die gespeicherte Flüssigkeit in die Gasphase übergeführt und tritt aus den porösen Sintermetallen in Form von Gasteilchen aus, die sich unter dem Einfluß der elektrischen Feldlinien der Koronaentladung auf die Folienoberfläche hin bewegen.

Bei den Vorrichtungen und Verfahren, die eine Flüssigkeit als die Entladungselektrode in den Koronaentladungsvorgang mit einbeziehen, ergibt sich die Notwendigkeit, auf spezielle Vorrichtungen zurückgreifen zu müssen, die ein Speichern bzw. Sammeln der Flüssigkeit ermöglichen und darüber hinaus aus einem Material bestehen müssen, das einen Durchtritt der in die Gasphase übergeführten Flüssigkeit in die Koronaentladungszone zuläßt. Wird die vorzubehandelnde Folienbahn durch eine Flüssigkeit hindurchgeführt, in der die Koronaentladung stattfindet, so wird offensichtlich die Transportgeschwindigkeit der Folienbahn durch die Flüssigkeit begrenzt. Erfolgt eine Koronaentladung in reaktiver Atmosphäre auf die Kunststoffoberfläche, so können anschließend verschiedene Schichten zum Veredeln der Kunststoffoberfläche durch weitere Verfahrensmaßnahmen aufgebracht werden. Ein gleichzeitiges Beschichten mit der Vorbehandlung ist in solch einem Fall nicht möglich. Das gleiche gilt für eine Vorbehandlung von Kunststoffoberflächen, bei der die Koronaentladung auf die Oberfläche in einer Flüssigkeit durchgeführt wird.

Aufgabe der Erfindung ist es, ein Verfahren und eine Vorrichtung, wie sie eingangs beschrieben sind, so zu gestalten, daß ein- oder mehrschichtige Formmaterialien mit reaktiven Substanzen in flüssiger Form vorbehandelt werden können, wobei diese Substanzen zugleich auch als spezielle Schichten zum Veredeln der Oberflächen der Formmaterialien auf diese appliziert werden können.

Diese Aufgabe wird erfindungsgemäß durch das eingangs beschriebene Verfahren in der Weise gelöst, daß die elektrisch leitfähige Schicht, auf die die Koronaentladung gerichtet wird, auch aus einem metallischen Werkstoff allein oder einer Kunststoffmatrix besteht, die elektrisch leitfähige, nichtmetallische Partikel enthält, und daß in die Koronaentladungszone mittels eines Luft- oder Gasstroms ein Aerosol, gebildet durch die Zerstäubung einer Flüssigkeit, eingebracht wird.

Die weitere Ausgestaltung des Verfahrens ergibt sich aus den Ansprüchen 2 bis 12.

Eine erfindungsgemäße Vorrichtung zur Oberflächenvorbehandlung von elektrisch leitfähigem Formmaterial mittels einer elektrischen Koronaentladung, mit von einem Generator mit einem hochfrequenten Wechselstrom hoher Spannung beaufschlagten Elektroden, die im Abstand zu einer geerdeten Gegenelektrode angeordnet sind, zeichnet sich dadurch aus, daß die mit dielektrischem Material ummantelten Elektroden einer ersten Koronaentladungseinrichtung gegenüber der Umgebung durch ein Gehäuse abgeschirmt sind, das über eine Leitung mit einer Zerstäubereinrichtung zum Zerstäuben von Flüssigkeit zu einem schwebfähigen Aerosol verbunden ist, daß die geerdete Gegenelektrode eine metallische Oberfläche aufweist und daß ein in der Durchsatzmenge regulierbares Gebläse an die Zerstäubereinrichtung angeschlossen ist und das Trägergas für das Aerosol durch die Zerstäubereinrichtung hindurch in die Koronaentladungseinrichtung fördert.

In Ausgestaltung der Vorrichtung besteht die Zerstäubereinrichtung aus einem piezoelektrisch arbeitenden Ultraschallschwingsystem bzw. weist die Zerstäubereinrichtung mit Schallgeschwindigkeit arbeitende Zweistoff-Zerstäuberdüsen auf.

Die Weiterbildung der Vorrichtung ergibt sich aus den Merkmalen der Ansprüche 15 bis 23.

Durch die Koronaentladung werden Reaktionsmechanismen ausgelöst, die eine chemische Oberflächenmodifizierung des behandelten Formmaterials bewirken. Je nach Art der eingesetzten Aerosolflüssigkeit und des Trägergases für das Aerosol werden auf der behandelten Oberfläche des Formmaterials aktive Zentren in Form funktioneller Gruppen und Radikalen erzeugt, die für nachfolgende Vorgänge Reaktionspartner für die aufgebrachten Substanzen darstellen. Je nach Art der verwendeten Aerosole und Trägergase lassen sich so auf der Oberfläche auch polymerisierbare bzw. vernetzende Schichten in einem einzelnen Verfahrensschritt aufbringen. Dabei können die Formmaterialien rein metallische einschichtige Folien sein, z. B. Aluminiumfolien, wie sie in der Verbundfolienherstellung verwendet werden, oder elektrisch leitfähig ausgerüstete Kunststoffsubstrate wie Folienbahnen, die mit Metallpigmente enthaltenden Druckfarben teil- oder vollflächig bedruckt oder mit aufgedampften Metallschichten ausgestaltet sind. Die Folienbahnen können bei magnetischen Aufzeichnungsträgern mit Schichten aus magnetische Partikel enthaltenden Dispersionen oder bei Thermoschreibbändern mit rußgefüllten Schichten ausgerüstet sein. Während bei der Koronabehandlung reiner Kunststoffmaterialien metallische, nicht isolierte Hochspannungselektroden/geerdete isolierte Gegenelektrode einsetzbar sind, ist diese Kombination bei der Erfindung nicht anwendbar, stattdessen werden dielektrisch isolierte Hochspannungselektroden zusammen mit einer geerdeten Metallwalze als Gegenelektrode benutzt. Nur diese Elektrodenkonfiguration läßt bei elektrisch leitfähigen Formmaterialien die Ausbildung der zur Plasmazündung durch die Koronaentladung notwendigen elektrischen Feldstärken zu.

Einzelheiten des Verfahrens nach der Erfindung sowie von Ausführungsbeispielen der erfindungsgemäßen Vorrichtung werden im folgenden anhand der Zeichnungen näher erläutert.

Es zeigen:

Figur 1    eine schematische Ansicht einer Vorrichtung zur Oberflächenvorbehandlung von Formmaterialien mittels einer elektrischen Koronaentladung,

Figur 2    eine schematische Ansicht einer Vorrichtung zur Oberflächenvorbehandlung von Formmaterialien, die zwei Koronaentladungseinrichtungen umfaßt,

Figur 3    eine schematische Ansicht einer weiteren Vorrichtung zur Oberflächenvorbehandlung von Formmaterialien mit zwei Koronaentladungseinrichtungen,

Figur 4    eine andere Ausführungsform der Vorrichtung nach der Erfindung, mit einer Koronaentladungseinrichtung, angeordnet am Austrittsspalt einer Breitschlitz-Luftdüse, zur Oberflächenvorbehandlung eines Formmaterials,

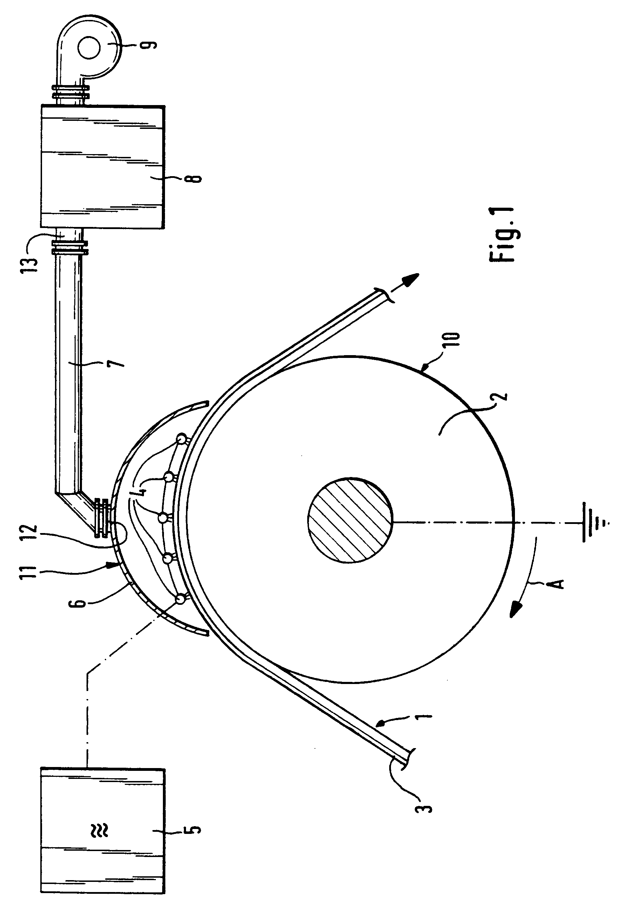

Figur 1 zeigt eine Vorrichtung, bestehend aus einer Walze 10, über die eine zu behandelnde Folienbahn 1 mit einer elektrisch leitfähigen Schicht 3 geführt ist, und einer ersten Koronaentladungseinrichtung 11, die ein Gehäuse 6 und Elektroden 4 umfaßt, die an einen Generator 5 angeschlossen sind. Die Elektroden 4 sind beispielsweise mit einem dielektrischen Material 29 ummantelte metallische Litzendrähte von 0,8 mm Durchmesser und einer Dicke der Dielektrikumsschicht, z. B. einer Silikonkautschukschicht, von 2 mm, so daß der Durchmesser der ummantelten Elektroden 4,8 mm beträgt. Die Walze besteht aus einem metallischen Walzenkern 2 ohne dielektrische Beschichtung. Der Walzenkern 2 ist geerdet, so daß die Walze 10 die Gegenelektrode zu den Elektroden 4 der Koronaentladungseinrichtung 11 bildet. Der Abstand zwischen den Elektroden 4 und der Folienbahn 1 beträgt bis zu etwa 2 mm. Die Walze 10 dreht sich in Richtung des Pfeils A. Der Generator 5 beaufschlagt die Elektroden 4 mit einem hochfrequenten Wechselstrom hoher Spannung. Dadurch wird zwischen der geerdeten Walze 10 und den Elektroden 4 eine elektrische Koronaentladung gezündet, durch deren Feldlinien, die in Figur 1 schematisch angedeutet sind, die Folienbahn 1 hindurchgeführt wird. Gegenüber der Umgebung sind die Elektroden 4 durch das Gehäuse 6 abgeschirmt, das über eine Leitung 7, beispielsweise eine starre Rohrleitung oder eine Schlauchleitung oder sonstige flexible Leitung, mit einer Zerstäubereinrichtung 8 verbunden ist. Die Leitung 7 ist an einen Rohrstutzen 12 des Gehäuses 6 einerseits und an einen Rohrstutzen 13 der Zerstäubereinrichtung 8 andererseits angeschlossen. In der Zerstäubereinrichtung 8 erfolgt die Zerstäubung der jeweils einzubringenden Flüssigkeit in ein schwebfähiges Aerosol, das mittels eines von einem in der Durchsatzmenge regulierbaren Gebläses 9 gelieferten Luft- bzw. Trägergasstromes in die Koronaentladungseinrichtung 11 transportiert wird. Bei der Zerstäubereinrichtung 8 handelt es sich um an und für sich bekannte Zweistoff-Zerstäuberdüsen, bei denen die Flüssigkeit durch das mit Schallgeschwindigkeit austretende Trägergas, beispielsweise Luft, in winzige Tröpfchen zerrissen wird, oder um piezoelektrische Ultraschallschwingsysteme, die durch ihre Schwingungen das Trägergas bzw. die Luft in entsprechende Schwingungen versetzen, um die Flüssigkeit in winzige Tröpfchen zerreißen zu können. Das Gebläse 9 ist unmittelbar an die Zerstäubereinrichtung 8 angeflanscht. Das in das Gehäuse 6 der Koronaentladungseinrichtung 11 eingebrachte bzw. eingeblasene Aerosol verteilt sich gleichmäßig im Inneren des Gehäuses 6 und wandert entlang den Feldlinien, die von den Elektroden 4 in Richtung Folienbahn 1 verlaufen, auf die Folienoberfläche und wird dort niedergeschlagen. Es ergibt sich dadurch eine sehr gleichmäßige Benetzung bzw. Beschichtung der Folienbahn 1 mit dem Aerosol, wodurch eine sehr gleichmäßige Modifizierung der Oberflächeneigenschaften der Folienbahn erfolgt.

Die Elektroden 4 weisen als Entladungselektroden eine offene Bauweise auf, d.h. eine Elektrodenform mit hinreichend großem freien Querschnitt zwischen den einzelnen Elektroden. Hierfür haben sich u. a. achsparallel zum Umfang der Walze 10 angeordnete dielektrisch ummantelte Drahtelektroden gut bewährt. Neben der Oberflächenaktivierung der Folienbahn können spezielle Beschichtungen auf die Folienbahn appliziert werden. Hierzu reichen in vielen Fällen extrem dünne Schichten aus, um die Oberflächeneigenschaften, wie zum Beispiel die Antistatik, Abhäsivität, Abriebfestigkeit, Haft-und Gleitreibungsverhalten, Barriereverhalten, Adhäsion, Haftvermittlung, einer Folie in gewünschter Weise zu verändern. Hier bieten sich u.a. zur Herstellung der Aerosole, neben Monomeren, Dispersionen, Lösungen nieder- und/oder hochmolekularer Komponenten und kolloidale Systeme an, die in wäßriger Form, oder in Lösungsmitteln gelöst, eingesetzt werden können.

Die Elektroden 4 der Koronaentladungseinrichtung 11 werden von dem Generator 5 mit einer Wechselspannung zwischen 5000 V und 25000 V beaufschlagt, wobei die zwischen den Elektroden 4 und der Walze 10 bzw. deren Walzenkern 2 als geerdete Gegenelektrode anliegende Wechselspannung proportional zu der Transportgeschwindigkeit der Folienbahn 1 durch die Koronaentladungseinrichtung 11 eingestellt wird. Untersuchungen haben gezeigt, daß mit höherer Transportgeschwindigkeit auch die anliegende Wechselspannung, die der Generator 5 liefert, erhöht werden muß, um eine gleichmäßige Oberflächenmodifikation der Folienbahn 1 zu erreichen.

Dieser Zusammenhang zwischen der Transportgeschwindigkeit und der angelegten Generatorspannung ist offensichtlich dadurch gegeben, daß bei höherer Transportgeschwindigkeit der Folienbahn 1 zugleich mehr Antistatikum auf die Folienbahn aufgesprüht werden muß, um eine gleichmäßige Beschichtung der Oberfläche der Folienbahn zu erhalten. Gleichzeitig mit der Erhöhung der zugeführten Menge an Antistatikum wird die angelegte Generatorspannung erhöht.

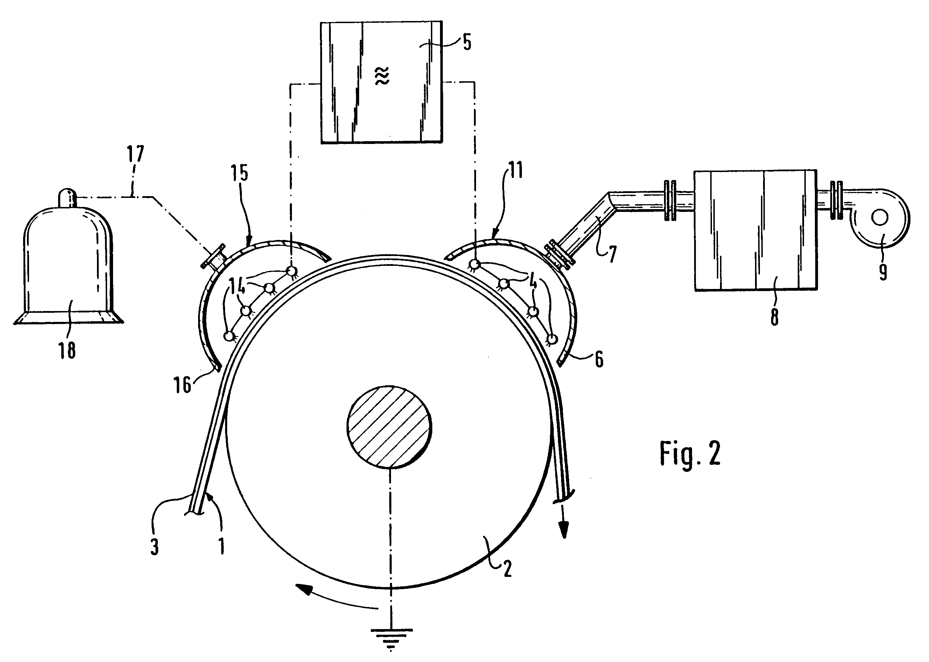

Figur 2 zeigt eine Ausführungsform der Erfindung, die ähnlich zu Figur 1 aufgebaut ist und bei der in Transportrichtung der Folienbahn 1 mit einer elektrisch leitfähigen Schicht 3 vor der ersten Koronaentladungseinrichtung 11 eine zweite Koronaentladungseinrichtung 15 angeordnet ist. Die Elektroden 14 der zweiten Koronaentladungseinrichtung sind durch ein Gehäuse 16 abgeschirmt, das über eine Leitung 17 mit einem Gasbehälter 18 verbunden ist. Die Elektroden 14 sind beispielsweise mit einem dielektrischen Material ummantelte Stahllitzendrähte von 0,8 mm Durchmesser. Die Dicke des Materials beträgt 2 mm, wobei das Material ein Silikonkautschuk ist. Selbstverständlich können bei allen Koronaentladungseinrichtungen auch andere Elektrodenausführungen wie mit elektrisch leitfähigem Werkstoff gefüllte Quarzglas-, Porzellan- oder Keramikröhrchen oder mit durch Flammspritzen mit Oxidkeramik beschichtete Metallprofile oder dergleichen verwendet werden. Der Generator 5 speist sowohl die Elektroden 4 der ersten Koronaentladungseinrichtung 11 als auch die Elektroden 14 der zweiten Koronaentladungseinrichtung 15. Die übrigen Bauteile dieser Anordnung, wie die Zerstäubereinrichtung 8 und das Gebläse 9, stimmen mit den entsprechenden Bauteilen der Anordnung nach Figur 1 überein und werden daher nicht nochmals beschrieben.

Bei der Vorrichtung nach Figur 2 erfolgt eine kombinierte Vorbehandlung der Folienbahn 1, die zunächst im Bereich der zweiten Koronaentladungseinrichtung 15 einer Koronaentladung in reaktiver Atmosphäre ausgesetzt wird, d.h. einer Oberflächenmodifizierung der Folienbahn 1 vor der Behandlung durch das Aufbringen eines Aerosols auf die Folienoberfläche mittels der Koronaentladung in der ersten Koronaentladungseinrichtung 11. Durch die Einspeisung eines Gases aus dem Gasbehälter 18 in die zweite Koronaentladungseinrichtung 15 kann eine abgestimmte Modifizierung bzw. Aktivierung der zu behandelnden Folienbahn in der Koronaentladungszone der ersten Koronaentladungseinrichtung 11 vorgenommen werden. Als Reaktivierungsgas können beispielsweise Stickstoff oder sonstige stickstoffhaltige gasförmige Verbindungen Anwendung finden.

Der Gasbehälter 18 ist über eine Leitung 17 mit dem Gehäuse 16 der zweiten Koronaentladungseinrichtung 15 verbunden. Üblicherweise wird der Druck des aus dem Gasbehälter 18 ausströmenden Gases durch ein nicht näher dargestelltes Druckreduzierventil geregelt. In Figur 2 ist gezeigt, daß die Entladungselektroden 4 und 14 der beiden Koronaentladungseinrichtungen 11 und 15 gemeinsam von dem einzigen Generator 5 mit Spannung beaufschlagt werden, jedoch ist auch eine Anordnung möglich, bei der die Elektroden jeder Koronaentladungseinrichtung von einem eigenen Generator mit Hochspannung beaufschlagt werden.

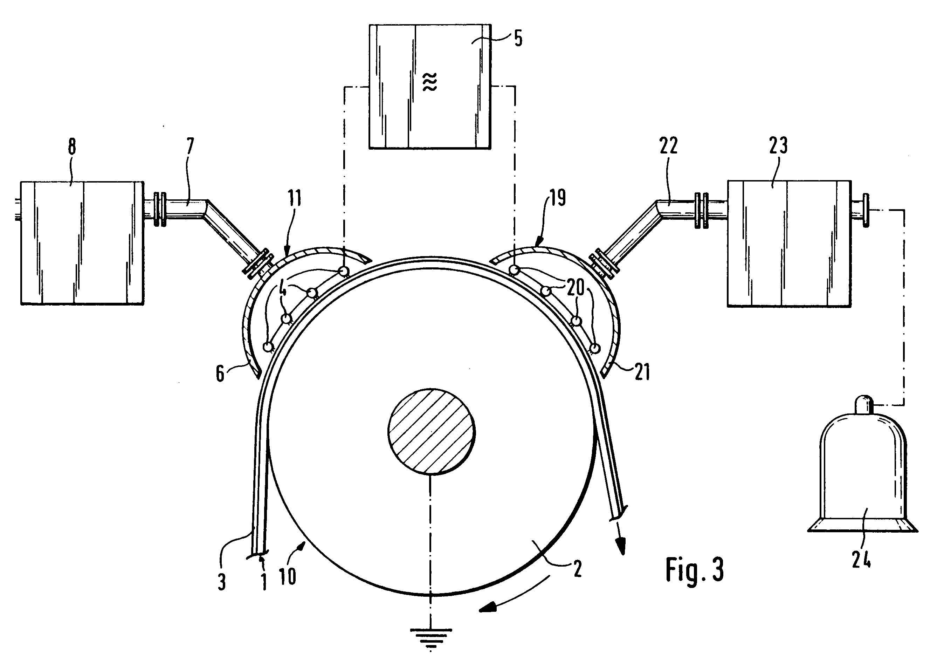

Figur 3 zeigt eine Ausführungsform der Erfindung, bei der zwei Vorrichtungen entsprechend der in Figur 1 dargestellten Vorrichtung entlang dem Umfang der Walze 10 angeordnet sind. Die erste Koronaentladungseinrichtung 11 mit der angeschlossenen Zerstäubereinrichtung 8 und dem Gebläse 9 entspricht weitgehend der Vorrichtung, wie sie anhand von Figur 1 beschrieben wurde. In Transportrichtung der Folienbahn 1 ist nach der ersten Koronaentladungseinrichtung 11 eine dritte Koronaentladungseinrichtung 19 mit Elektroden 20 vorgesehen, deren Gehäuse 21 die Elektroden 20 umschließt. Die Elektroden 20 besitzen eine Ummantelung aus dielektrischem Material 31 und sind in der gleichen Weise aufgebaut wie die Elektroden der ersten und zweiten Koronaentladungseinrichtung. Das Gehäuse 20 ist über einen Rohrstutzen und eine Leitung 22 mit einem Rohrstutzen einer Zerstäubereinrichtung 23 verbunden, an die ein Gasbehälter 24 angeschlossen ist. In dem Gasbehälter 24 ist ein Trägergas für das Aerosol gespeichert, das in der Zerstäubereinrichtung 23 aus der Behandlungsflüssigkeit erzeugt wird. Als Trägergas kommen, neben Luft und Stickstoff, noch verschiedene Edelgase in Betracht.

Die Elektroden 4 und 20 der ersten und dritten Koronaentladungseinrichtung 11 bzw. 19 sind an den gemeinsamen Generator 5 angeschlossen. Jedoch ist es auch bei dieser Vorrichtung möglich, daß jede der Koronaentladungseinrichtungen über einen getrennten Generator mit Spannung versorgt wird.

Über das Gebläse 9 kann entweder Luft oder ein Gas in die Zerstäubereinrichtung 8 eingeblasen werden, das dann als Trägergas für das jeweilige Aerosol dient, welches in die Koronaentladungseinrichtung 11 eingespeist wird. Mit der gezeigten Vorrichtung können zwei unterschiedliche Flüssigkeiten bzw. deren Aerosole verwendet werden und darüber hinaus auch noch unterschiedliche Trägergase für das jeweilige Aerosol. Diese Vorrichtung läßt durch die Kombination von flüssigen und gasförmigen Reaktionsteilnehmern vielseitige Oberflächenmodifikationen der Folienbahn 1 zu. Je nach Art der verwendeten Substanzen lassen sich auf die Folienbahnoberfläche auch polymerisierbare bzw. vernetzende Schichten durch die Aerosole aufbringen. Die Folienbahn 1 kann aus Polypropylen, Polyester, ebenso auch aus Polyvinylchlorid bestehen. Mögliche Transportgeschwindigkeiten für die Folienbahn 1 liegen im Bereich von 20 bis 200 m/min.

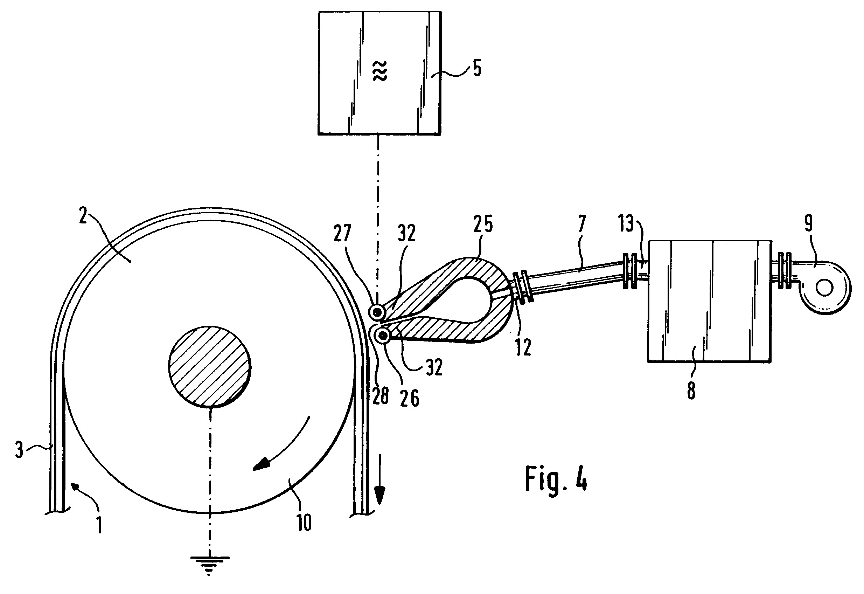

Figur 4 zeigt eine abgewandelte Ausführungsform der Vorrichtung, die sich von den Vorrichtungen gemäß den Figuren 1 bis 3 in der Weise unterscheidet, daß das in der Zerstäubereinrichtung 8 erzeugte Aerosol durch das Gebläse 9 über die Leitung 7 in eine Breitschlitz-Luftdüse 25 eingeblasen wird. Die Leitung 7 ist über Rohrstutzen 12 und 13 mit der Luftdüse 25 und der Zerstäubereinrichtung 8 verbunden. An den Düsenlippen 32,32, die den Austrittsspalt 28 der Luftdüse 25 begrenzen, sind hochspannungsführende Entladungselektroden 27 in Gestalt von Metalldrähten, die in einem Quarzglasröhrchen 26 eingezogen bzw. eingeschmolzen sind, angeordnet. Die geerdete Gegenelektrode zu den Entladungselektroden 27 bildet der Walzenkern 2 der Walze 10, über deren Teilumfang die zu behandelnde Folienbahn 1, die eine elektrisch leitfähige Schicht 3 aufweist, geführt ist. Der Generator 5 beaufschlagt die Elektroden 27 mit einem hochfrequenten Wechselstrom hoher Spannung. Das aus der Luftdüse 25 austretende Aerosol gelangt direkt in das Feld der Koronaentladung. Infolge des an den Elektroden 27 anliegenden elektrischen Feldes werden die Aerosoltröpfchen im elektrischen Feld gehalten und an einem unkontrollierten Vagabundieren in die Umgebung gehindert, was sich sowohl in einer nochmals verbesserten Vergleichmäßigung der auf das Substrat aufgebrachten Schichten als auch in einer weitgehend verlustfreien Nutzung der angebotenen Aerosolmenge niederschlägt.

Die in Fig. 4 dargestellte Vorrichtung mit Luftdüse kann selbstverständlich auch in der in Fig. 3 gezeigten Konfiguration anstelle jeder der dort verwendeten Vorrichtungen eingesetzt werden.

Das Verfahren und die Vorrichtungen sind für die Oberflächenmodifizierung von teil- oder vollflächig elektrisch leitfähig beschichteten, bedruckten oder metallbedampften Kunststoffolien und von reinen Metallfolien anwendbar. Ebenso können Kunststoffolien, Papiere, Fäden, Fasern, Gewebe und Gewirke, in deren Matrix metallische oder sonstige elektrisch leitfähige Partikel eingebaut sind, oberflächenmodifiziert werden. Dabei kann die Vorbehandlung sowohl auf der leitfähigen als auch auf der nicht leitfähigen Substratoberfläche vorgenommen werden.

Das erfindungsgemäße Verfahren zur Modifizierung von elektrisch leitfähigen Kunststoffoberflächen mit Hilfe von Koronaentladungen erweitert durch die Einbeziehung von Flüssigkeiten, speziell in Form von Aerosolen, in die Koronaentladungsprozesse die Möglichkeiten der chemischen Veränderung von Oberflächen von Kunststoffmaterialien erheblich. Je nach Art der verwendeten Flüssigkeiten für die Aerosole und der Transportgase für die jeweiligen Aerosole können auch die nachfolgenden Veredlungsschritte, wie Beschichten, Drucken, Laminieren, Lackieren, abgestimmte Oberflächenmodifizierungen, eingestellt bzw. chemisch aktive Schichten auf die behandelten elektrisch leitfähigen Kunststoffoberflächen appliziert werden.

Nachstehend ist noch eine Auswahl von Substanzen, die als Aerosole in die Koronaentladungseinrichtungen eingebracht werden können, tabellarisch zusammengestellt. In der Tabelle ist zu den einzelnen Substanzen jeweils ihre Verwendbarkeit bzw. die Art der Oberflächemodifizierung des Kunststoffes, die erzielt werden kann, angeführt. Diese Auswahl erhebt keinen Anspruch auf Vollständigkeit und beschränkt die Erfindung nicht, da grundsätzlich alle Substanzen, die Aerosole bilden und die Kunststoffoberflächen in gewünschter Weise modifizieren können, anwendbar sind.

TABELLE

| Substanzen für Aerosole | Eigenschaften der Kunststoffober- flächen nach der Modifizierung |
|---|---|
| Polyurethan Polyvinylalkohol Copolyester Acrylat | Haftvermittlung |
| Acrylat | Schlupf/Haftvermittlung |
| Polyvinyliden- chlorid | Barriereverhalten/ Haftvermittlung |
| Fluorpolymer Fluoracrylat Perfluoropolyether Polyethersiloxane | Schlupf/Antihaftung |
| Acrylat | Schlupf |
| Quaternäres Ammonium- salz Cholinesterchlorid Alkylsulfonat Alkylsulfat Dialkyldimethyl- ammoniumchloridpolymer | Antistatikum |

**Patentansprüche**

1. Verfahren zur Oberflächenvorbehandlung von ein- oder mehrschichtigem Formmaterial (1) mittels einer elektrischen Koronaentladung, die zwischen spannungsfuhrenden Elektroden (4; 27) und einer geerdeten Gegenelektrode (10) abläuft, zwischen denen das ein- oder mehrschichtige Formmaterial sich befindet, von dem eine elektrisch leitfähige Schicht metallische Partikel in einer Kunststoffmatrix enthält, dadurch gekennzeichnet, daß die elektrisch leitfähige Schicht (3) auf die die Koronaentladung gerichtet ist, auch aus einem metallischen Werkstoff allein oder einer Kunststoffmatrix besteht, die elektrisch leitfähige, nichtmetallische Partikel enthält, und daß in die Koronaentladungszone mittels einer Luft- oder Gasstroms ein Aerosol, gebildet durch die Zerstäubung einer Flüssigkeit, eingebracht wird.

2. Verfahren nach Anspruch 1, dadurch gekennzeichnet, daß die elektrisch leitfähige Schicht (3) des zu behandelnden Formmaterials (1) in einem ersten Schritt durch eine konventionelle Koronaentladung oberflächenaktiviert und in einem zweiten Schritt einer Koronaentladung in einer Aerosol-Atmosphäre ausgesetzt wird.

3. Verfahren nach Anspruch 1, dadurch gekennzeichnet, daß die elektrisch leitfähige Schicht (3) des zu behandelnden Formmaterials (1) mindestens zwei Koronaentladungen in Folge ausgesetzt wird, wobei jede der Koronaentladungen in jeweils unterschiedlicher Aerosol-Atmosphäre vorgenommen wird.

4. Verfahren nach den Ansprüchen 1 bis 3, dadurch gekennzeichnet, daß das Aerosol durch Trägergase, wie Luft, Gase oder Gasgemische, in die Koronaentladungszone transportiert wird und daß die Trägergase durch Zersetzung im Plasma der Koronaentladung Schichten bilden.

5. Verfahren nach den Ansprüchen 1 bis 4, dadurch gekennzeichnet, daß in die Koronaentladungszone Aerosole von Monomeren, Dispersionen, Lösungen von nieder- und/oder hochmolekularen Polymerkomponenten und kolloidalen Systemen in wäßriger Form oder in Lösungsmitteln gelöst, eingebracht werden.

6. Verfahren nach den Ansprüchen 1 bis 5, dadurch gekennzeichnet, daß die Oberflächenschichten zweier Formmaterialien, unabhängig voneinander, in zwei unterschiedlichen Aerosol-Atmosphären behandelt und anschließend die Oberflächenschichten miteinander in Kontakt gebracht werden.

7. Verfahren nach den Ansprüchen 1 bis 6, dadurch gekennzeichnet, daß das durch Zerstäuben erzeugte Aerosol in eine Luftdüse (25) eingeblasen wird und daß unmittelbar am Austrittsspalt (28) der Luftdüse die Koronaentladung gezündet wird.

8. Verfahren nach den Ansprüchen 1 bis 7, dadurch gekennzeichnet, daß das zu behandelnde Formmaterial, die zum Aerosol zu zerstäubende Flüssigkeit und das dem Aerosoltransport dienende Trägergas auf eine Temperatur zwischen 20 ° und 95 °C erwärmt werden.

9. Verfahren nach Anspruch 1, dadurch gekennzeichnet, daß das Formmaterial eine Metallfolienbahn ist, die auf der Außenseite mit einem Aerosol beaufschlagt wird.

10. Verfahren nach Anspruch 1, dadurch gekennzeichnet, daß das Formmaterial aus Kunststofffolien besteht, in deren Polymermatrix elektrisch leitfähige Partikel eingelagert werden oder die ein- oder beidseitig teil- oder vollflächig mit elektrisch leitfähigen Schichten beschichtet, bedampft oder bedruckt werden.

11. Verfahren nach Anspruch 9, dadurch gekennzeichnet, daß der Oberflächenwiderstand der mit dem Aerosol beaufschlagten Außenseite der Folienbahn zwischen $10^7$ und $10^8$ Ohm•m beträgt.

12. Verfahren nach Anspruch 1, dadurch gekennzeichnet, daß als Formmaterial metallisierte Papiere, mit Metallfolien kaschierte Papierverbunde, metallisierte Fäden, Fasern, Gewirke oder Gewebe verwendet werden.

13. Vorrichtung zur Oberflächenvorbehandlung von elektrisch leitfähigem Formmaterial (1) mittels einer elektrostatischen Koronaentladung, mit von einem Generator (5) mit einem hochfrequenten Wechselstrom hoher Spannung beaufschlagten Elektroden (4), die im Abstand zu einer geerdeten Gegenelektrode (10) angeordnet sind, dadurch gekennzeichnet, daß die mit dielektrischem Material ummantelten Elektroden (4) einer ersten Koronaentladungseinrichtung (11) gegenüber der Umgebung durch ein Gehäuse (6) abgeschirmt sind, das über eine Leitung (7) mit einer Zerstäubereinrichtung (8) zum Zerstäuben von Flüssigkeit zu einem schwebfähigen Aerosol verbunden ist, daß die geerdete Gegenelektrode eine metallische Oberfläche aufweist und daß ein in der Durchsatzmenge regulierbares Gebläse (9) an die Zerstäubereinrichtung (8) angeschlossen ist und das Trägergas für das Aerosol durch die Zerstäubereinrichtung (8) hindurch in die Koronaentladungseinrichtung (11) fördert.

**14.** Vorrichtung nach Anspruch 13, dadurch gekennzeichnet, daß die Zerstäubereinrichtung (8) aus einem piezoelektrisch arbeitenden Ultraschallschwingsystem besteht.

**15.** Vorrichtung nach Anspruch 13, dadurch gekennzeichnet, daß die Zerstäubereinrichtung (8) mit Schallgeschwindigkeit arbeitende Zweistoff-Zerstäuberdüsen aufweist.

**16.** Vorrichtung nach Anspruch 13, dadurch gekennzeichnet, daß der Generator (5) mit einer Wechselspannung von 5000 V bis 25000 V die Elektroden (4) und die Gegenelektrode (2) beaufschlägt.

**17.** Vorrichtung nach Anspruch 16, dadurch gekennzeichnet, daß die zwischen den Elektroden (4) und der Gegenelektrode (2) anliegende Wechselspannung, die der regelbare Generator (5) erzeugt, proportional zu der Transportgeschwindigkeit des Formmaterials durch die erste Koronaentladungseinrichtung (11) ist.

**18.** Vorrichtung nach Anspruch 13, dadurch gekennzeichnet, daß in Transportrichtung des Formmaterials (1) vor der ersten Koronaentladungseinrichtung (11) eine zweite Koronaentladungseinrichtung (15) mit Elektroden (14), die mit dielektrischem Material ummantelt sind und durch ein Gehäuse (16) abgeschirmt sind, angeordnet ist und daß das Gehäuse (16) über eine Leitung (17) mit einem Gasbehälter (18) verbunden ist.

**19.** Vorrichtung nach Anspruch 18, dadurch gekennzeichnet, daß die Elektroden (4, 14) der ersten und zweiten Koronaentladungseinrichtung (11, 15) an den gemeinsamen Generator (5) angeschlossen sind.

**20.** Vorrichtung nach Anspruch 13, dadurch gekennzeichnet, daß in Transportrichtung des Formmaterials (1) nach der ersten Koronaentladungseinrichtung (11) eine dritte Koronaentladungseinrichtung (19) mit Elektroden (20), die von dielektrischem Material ummantelt sind, angeordnet ist, daß ein Gehäuse (21) die Elektroden (20) umschließt und über eine Leitung (22) mit einer Zerstäubereinrichtung (23) verbunden ist, in die ein Trägergas für ein Aerosol von einem angeschlossenen Gasbehälter (24) aus eingespeist wird.

**21.** Vorrichtung nach Anspruch 20, dadurch gekennzeichnet, daß die Elektroden (4, 20) der ersten und dritten Koronaentladungseinrichtung an den gemeinsamen Generator (5) angeschlossen sind.

**22.** Vorrichtung zur Oberflächenvorbehandlung von elektrisch leitfähigem Formmaterial (1) mittels einer elektrostatischen Koronaentladung, mit von einem Generator (5) mit einem hochfrequenten Wechselstrom hoher Spannung beaufschlagten Elektroden (27), die im Abstand zu einer geerdeten Gegenelektrode (10) angeordnet sind, dadurch gekennzeichnet, daß die Elektroden (27) an den Düsenlippen (32) im Bereich des Austrittsspalts (28) einer Breitschlitzdüse (25) angeordnet und mit einem dielektrischen Material (26) ummantelt sind und daß die Breitschlitzdüse (25) über eine flexible oder starre Leitung (7) mit einer Zerstäubereinrichtung (8) zum Zerstäuben von Flüssigkeit zu einem Aerosol verbunden ist.

**23.** Vorrichtung nach Anspruch 22, dadurch gekennzeichnet, daß ein die Durchsatzmenge an Trägergas regelndes Gebläse (9) an die Zerstäubereinrichtung (8) angeschlossen ist und das Trägergas für das Aerosol durch die Zerstäubereinrichtung (8) hindurch in die Breitschlitzdüse (25) fördert.

**Claims**

**1.** A process for pretreating the surface of a single-layer or multilayer molded material (1) by means of an electrical corona discharge which takes place between live electrodes (4, 27) and an earthed counter-electrode (10), between which the single-layer or multilayer molded material is located, an electrically conductive layer of the material containing metallic particles in a plastic matrix, wherein the electrically conductive layer (3), onto which the corona discharge is directed, consists of a metallic material along or of a plastic matrix containing electrically conductive, non-metallic particles, and wherein an aerosol formed by atomizing a liquid is introduced into the corona discharge zone by means of an air stream or gas stream.

2. The process as claimed in claim 1, wherein the electrically conducting layer (3) of the molded material (1) to be treated is activated at the surface by a conventional corona discharge in a first step and, in a second step, is exposed to a corona discharge in an aerosol atmosphere.

3. The process as claimed in claim 1, wherein the electrically conducting layer (3) of the molded material (1) to be treated is exposed to two or more corona discharges in sequence, each of the corona discharges being produced in a different aerosol atmosphere.

4. The process as claimed in claim 1 to 3, wherein the aerosol is transported into the corona discharge zone by means of carrier gases, such as air, gases or gas mixtures, and the carrier gases form layers by decomposition in the plasma of the corona discharge.

5. The process as claimed in claim 1 to 4, wherein aerosols of monomers, dispersions, solutions of low molecular weight and/or high molecular weight polymer components and colloidal systems in aqueous form or dissolved in solvents are introduced into the corona discharge zone.

6. The process as claimed in claims 1 to 5, wherein the surface layers of two molded materials are treated, independently of one another, in two different aerosol atmospheres and the surface layers are then brought into contact with one another.

7. The process as claimed in claims 1 to 6, wherein the aerosol produced by atomization is blown into an air nozzle (25), and the corona discharge is struck directly at the outlet nip (28) of the air nozzle.

8. The process as claimed in claims 1 to 7, wherein the molded material to be treated, the liquid to be atomized to give the aerosol, and the carrier gas used to transport the aerosol are heated to a temperature between 20 °C and 95 °C.

9. The process as claimed in claim 1, wherein the molded material is a metal foil web which is treated with an aerosol on the outside.

10. The process as claimed in claim 1, wherein the molded material consists of plastic films in whose polymer matrix electrically conducting particles are embedded or which is provided partially or completely on one or both sides with electrically conducting layers by coating, vapor deposition or printing.

11. The process as claimed in claim 9, wherein the surface resistance of the outside of the film web, which side has been treated with the aerosol, is between $10^7$ and $10^8$ ohm•m.

12. The process as claimed in claim 1, wherein metallized papers, paper laminated with metal foils, metallized filaments, fibers, knitted fabrics or woven fabrics are used as the molded material.

13. Apparatus for pretreating the surface of an electrically conducting molded material (1) by means of an electrostatic corona discharge, having electrodes (4), which are subjected to a high-frequency alternating current of high voltage by a generator (5) and which are arranged a distance away from an earthed counter-electrode (10), wherein the electrodes (4) of a first corona discharge means (11) which are covered with dielectric material are shielded from the environment by a housing (6) which is connected via a line (7) to an atomizing apparatus (8) for atomizing liquid to give a suspendible aerosol, the earthed counter-electrode has a metallic surface and a blower (9) whose throughput can be regulated is connected to the atomizing apparatus (8) and conveys the carrier gas for the aerosol through the atomizing apparatus (8) into the corona discharge means (11).

14. Apparatus as claimed in claim 13, wherein the atomizing apparatus (8) consists of a piezoelectric ultrasonic vibrator system.

15. Apparatus as claimed in claim 13, wherein the atomizing apparatus (8) has two-material atomizer nozzles operating at the speed of sound.

16. Apparatus as claimed in claim 13, wherein the generator (5) supplies the electrodes (4) and the counter-electrode (2) with an alternating current voltage of 5,000 to 25,000 V.

17. Apparatus as claimed in claim 16, wherein the alternating current voltage applied between the electrodes (4) and the counter-electrode (2) and generated by the regulable generator (5) is proportional to the transport velocity of the molded material through the first corona discharge means (11).

18. Apparatus as claimed in claim 13, wherein a second corona discharge means (15) having electrodes (14) which are covered with dielectric material and are shielded by a housing (16), is arranged upstream of the first corona discharge means (11) in the transport direction of the molded material (1), and the housing (16) is connected to a gas container (18) via a line (17).

19. Apparatus as claimed in claim 18, wherein the electrodes (4, 14) of the first and second corona discharge means (11, 15) are connected to the common generator (5).

20. Apparatus as claimed in claim 13, wherein a third corona discharge means (19) having electrodes (20) covered with dielectric material is arranged downstream of the first corona discharge means (11) in the transport direction of the molded material (1), and a housing (21) encloses the electrodes (20) and is connected via a line (22) to an atomizing apparatus (23) into which a carrier gas for an aerosol is fed from a connected gas container (24).

21. Apparatus as claimed in claim 20, wherein the electrodes (4, 20) of the first and third corona discharge means are connected to the common generator (5).

22. Apparatus for pretreating the surface of electrically conducting molded material by means of an electrostatic corona discharge, having electrodes (27) which are subjected to a high-frequency alternating current of high voltage by a generator (5) and are arranged a distance away from an earthed counter electrode (10), wherein the electrodes (27) are arranged on the nozzle lips (32) in the region of the outlet nip (28) of a slot-like nozzle (25) and are covered with a dielectric material (26), and the slot-like nozzle (25) is connected via a flexible or rigid line (7) to an atomizing apparatus (8) for atomizing liquid to give an aerosol.

23. Apparatus as claimed in claim 22, wherein a blower (9) regulating the throughput of carrier gas is connected to the atomizing apparatus (8), and the carrier gas for the aerosol is conveyed through the atomizing apparatus (8) into the slot-like nozzle (25) by means of the blower.

**Revendications**

1. Procédé permettant le traitement préalable de surface d'un matériau profité (1) à une ou plusieurs couches à l'aide d'une décharge électrique à effet corona qui se produit entre des électrodes de tension (4 ; 27) et une électrode complémentaire (10) mise à la terre, électrodes entre lesquelles est disposé le matériau profité à une ou plusieurs couches dont une couche électriquement conductrice contient des particules métalliques dans une matrice de matière plastique, caractérisé en ce que la couche électriquement conductrice (3) sur laquelle la décharge corona est orientée est constituée aussi d'une substance métallique seule ou d'une matrice en matière plastique qui contient des particules non métalliques électriquement conductrices et en ce qu'un aérosol, formé par pulvérisation d'un liquide, est introduit dans la zone de la décharge corona à l'aide d'un courant d'air ou de gaz.

2. Procédé suivant la revendication 1, caractérisé en ce que la couche électriquement conductrice (3) du matériau profilé (1) à traiter est soumise dans une première phase à une activation de surface par une décharge corona classique et est soumise dans une seconde phase à une décharge corona dans une atmosphère d'aérosol.

3. Procédé suivant la revendication 1 caractérisé en ce que la couche électriquement conductrice (3) du matériau profilé (1) à traiter est soumise successivement à au moins deux décharges corona, ces décharges corona étant exécutées dans des atmosphères d'aérosol différentes pour chacune.

**4.** Procédé suivant les revendications 1 à 3, caractérisé en ce que l'aérosol est transporté par des véhicules gazeux, tels qu'air gaz ou mélanges gazeux, dans la zone de décharge corona et en ce que ces véhicules gazeux forment des couches sous l'effet d'une décomposition dans le plasma de la décharge corona.

**5.** Procédé suivant les revendications 1 à 4, caractérisé en ce qu'on introduit dans la zone de décharge corona des aérosols de monomères, dispersions, solutions de composants polymères à faible poids moléculaire et/ou poids moléculaire élevé et des systèmes colloïdaux sous forme aqueuse ou dissous dans des solvants.

**6.** Procédé suivant les revendications 1 à 5, caractérisé en ce que les couches de surface de deux matériaux profilés sont traitées d'une manière indépendante l'une de l'autre dans deux atmosphères d'aérosol différentes et en ce qu'ensuite, les couches de surface sont amenées en contact l'une avec l'autre.

**7.** Procédé suivant les revendications 1 à 6, caractérisé en ce que l'aérosol produit par pulvérisation est insufflé dans une buse d'air (25) et en ce que la décharge corona est amorcée directement à l'endroit de la fente de sortie (28) de la buse d'air.

**8.** Procédé suivant les revendications 1 à 7, caractérisé en ce que la température du matériau profilé à traiter, du liquide à pulvériser en aérosol et du véhicule gazeux servant au transport de l'aérosol est élevée à une valeur comprise entre 20 °C et 95 °C.

**9.** Procédé suivant la revendication 1, caractérisé en ce que le matériau profilé est une nappe de film métallique qui est traitée à l'aide d'un aérosol sur sa face extérieure.

**10.** Procédé suivant la revendication 1, caractérisé en ce que le matériau profilé est constitué de films en matière plastique dans la matrice polymère desquels sont incorporées des particules électriquement conductrices ou qui, sur une face ou sur les deux faces et sur une partie ou la totalité de leur surface, reçoivent des couches électriquement conductrices par revêtement, métallisation sous vide ou impression.

**11.** Procédé suivant la revendication 9, caractérisé en ce que la résistance superficielle de la face extérieure de la nappe de film qui est traitée à l'aide de l'aérosol est comprise entre $10^7$ et $10^8$ ohm.m.

**12.** Procédé suivant la revendication 1, caractérisé en ce que, comme matériau profilé, on utilise des papiers métallisés, des composites de papier doublés de films métalliques, des fils métallisés, des tissus à mailles ou des tissus tissés.

**13.** Dispositif permettant le traitement de surface d'un matériau profilé (1) électriquement conducteur à l'aide d'une décharge électrique corona, comprenant des électrodes (4) qui sont alimentées par un générateur (5) en courant alternatif haute fréquence à tension élevée et qui sont disposées à une certaine distance d'une contre-électrode (10) mise la terre, caractérisé en ce que les électrodes (4) d'un premier dispositif de décharge corona (11), enveloppées d'un matériau diélectrique, sont protégées du milieu environnant par un capot (6) qui est relié par une tuyauterie (7) à un dispositif de pulvérisation (8) servant à pulvériser un liquide en un aérosol en suspension, en ce que la contre-électrode mise à la terre comporte une surface métallique et en ce qu'une soufflante (9) à débit réglable est raccordée au dispositif de pulvérisation (8) et envoie le véhicule gazeux prévu pour l'aérosol dans le dispositif de décharge corona (11) en le faisant passer par le dispositif de pulvérisation (8).

**14.** Appareil suivant la revendication 13, caractérisé en ce que le dispositif de pulvérisation (8) est constitué d'un système vibrant à ultrasons à fonctionnement piézo-électrique.

**15.** Appareil suivant la revendication 13, caractérisé en ce que le dispositif de pulvérisation (8) comprend des buses de pulvérisation en deux matières, fonctionnant à la vitesse du son.

EP 0 355 622 B1

**16.** Appareil suivant la revendication 13, caractérisé en ce que le générateur (5) applique aux électrodes (4) et à la contre-électrode (2) une tension alternative comprise entre 5 000 V et 25 000 V.

**17.** Appareil suivant la revendication 16, caractérisé en ce que la tension alternative appliquée entre les électrodes (4) et la contre-électrode (2), tension que produit le générateur (5) réglable, est proportionnelle à la vitesse de transport du matériau profilé dans le premier dispositif de décharge corona (11).

**18.** Appareil suivant la revendication 13, caractérisé en ce qu'un second dispositif de décharge corona (15), comportant des électrodes (14) qui sont gainées d'une matière diélectrique et sont protégées par un capot (16), est disposé en amont du premier dispositif de décharge corona (11) suivant le sens de transport du matériau profilé (1) et en ce que le capot (16) est relié à un réservoir de gaz (18) par une tuyauterie (17).

**19.** Appareil suivant la revendication 18, caractérisé en ce que les électrodes (4, 14) du premier et du second dispositifs de décharge corona (11, 15) sont raccordées au générateur (5) commun.

**20.** Appareil suivant la revendication 13, caractérisé en ce qu'un troisième dispositif de décharge corona (19), comportant des électrodes (20) qui sont gainées d'une matière diélectrique, est disposé en aval du premier dispositif de décharge corona (11) suivant le sens de transport du matériau profilé (1) et en ce qu'un capot (21) entoure les électrodes (20) et est relié par une tuyauterie (22) à un dispositif de pulvérisation (23) dans lequel un véhicule gazeux prévu pour un aérosol est introduit à partir d'un réservoir de gaz (24) raccordé.

**21.** Appareil suivant la revendication 20, caractérisé en ce que les électrodes (4, 20) du premier et du troisième dispositifs de décharge corona sont raccordées au générateur (5) commun.

**22.** Appareil permettant le traitement préalable de surface d'un matériau profilé (1) électriquement conducteur à l'aide d'une décharge électrostatique corona, comprenant des électrodes (27) qui sont alimentées par un générateur(5) en courant alternatif haute fréquence à tension élevée et qui sont disposées à une certaine distance d'une contre-électrode (10) mise à la terre, caractérisé en ce que les électrodes (27) sont disposées à l'endroit de lèvres de buse (32) dans la zone de la fente de sortie (28) d'une buse à fente large (25) et sont gainées d'une matière diélectrique (26) et en ce que la buse à fente large (25) est reliée par une tuyauterie souple ou rigide (7) à un dispositif de pulvérisation (8) permettant de pulvériser un liquide de façon à former un aérosol.

**23.** Appareil suivant la revendication 22, caractérisé en ce qu'une soufflante (9) réglant le débit de véhicule gazeux est raccordée au dispositif de pulvérisation (8) et en ce que le véhicule gazeux utilisé pour l'aérosol est envoyé par le dispositif de pulvérisation (8) dans la buse à fente large (25).

13

Fig.1

EP 0 355 622 B1

Fig. 2

Fig. 3

EP 0 355 622 B1

Fig. 4